(19) Europäisches Patentamt
European Patent Office
Office européen des brevets

(11) **EP 3 591 424 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **19181912.7**

(22) Anmeldetag: **24.06.2019**

(51) Internationale Patentklassifikation (IPC):
*G01S 7/481* (2006.01)    *G01S 7/497* (2006.01)
*G01S 17/93* (2020.01)    *G01S 17/89* (2020.01)

(52) Gemeinsame Patentklassifikation (CPC):
**G01S 7/4972; G01S 7/4811; G01S 17/36; G01S 17/894; G01S 17/931**

(54) **3D-LICHTLAUFZEITKAMERA UND VERFAHREN ZUR ERFASSUNG DREIDIMENSIONALER BILDDATEN**

3D RADIATED LIGHT CAMERA AND METHOD FOR RECORDING THREE-DIMENSIONAL IMAGE DATA

CAMÉRA D'ÉVALUATION DU TEMPS DE PROPAGATION DE LA LUMIÈRE 3D ET PROCÉDÉ DE DÉTECTION DE DONNÉES D'IMAGE TRIDIMENSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018 DE 102018116481**

(43) Veröffentlichungstag der Anmeldung:
**08.01.2020 Patentblatt 2020/02**

(73) Patentinhaber: **SICK AG**
**79183 Waldkirch (DE)**

(72) Erfinder: **Jachmann, Fabian**
**79102 Freiburg (DE)**

(56) Entgegenhaltungen:
**EP-A1- 2 927 711**      **DE-A1-102010 038 566**
**DE-A1-102014 206 236**

**Beschreibung**

Die Erfindung betrifft eine 3D-Lichtlaufzeitkamera und ein Verfahren zur Erfassung dreidimensionaler Bilddaten nach dem Oberbegriff von Anspruch 1 beziehungsweise 12.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von stationären und mobilen Anwendungen nutzen, um mehr Informationen über Objekte in der von der Kamera erfassten Szenerie zu gewinnen und so verschiedene Aufgaben zu lösen.

Zur Ermittlung der Tiefeninformationen wird hier die phasenbasierte Lichtlaufzeitmessung verwendet (TOF, Time of Flight). Dazu wird eine Szene kontinuierlich oder jedenfalls für gewisse Zeitintervalle mit periodisch amplitudenmoduliertem Licht ausgeleuchtet. Die Kamera misst für jeden Bildpunkt die Phasenverschiebung zwischen gesendetem und reflektiertem Signal als Maß der Lichtlaufzeit. Eine Technologie für die Gewinnung von dreidimensionalen Bilddaten mit einem Phasenverfahren ist die Photomischdetektion (PMD).

Die Modulationsfrequenz liegt typischerweise in der Größenordnung von 10 MHz. Daraus ergibt sich ein Eindeutigkeitsbereich von etwa 15 m. Anhand der Phasenlage allein lässt sich also nicht erkennen, ob ein Pixel Licht von einem Objekt in einem Abstand von 1 m oder 16 m empfängt. Es ist bekannt, mehrere Frequenzen simultan zur Modulation einzusetzen, um den Eindeutigkeitsbereich zu vergrößern und auch die Messgenauigkeit zu erhöhen.

Für bestimmte Anwendungen einschließlich solchen in der Sicherheitstechnik zur Absicherung einer Gefahrenstelle, wie sie beispielsweise ein Fahrzeug, ein Roboter oder eine sonstige gefährliche Maschine darstellt, muss eine Kamera besonders zuverlässig arbeiten und deshalb hohe Sicherheitsanforderungen erfüllen. Ein häufiger Anwendungsfall ist die Überwachung von Schutzfeldern oder etwas allgemeiner die Annäherungsüberwachung von Objekten an eine Gefahrenstelle. Werden Objekte in unzulässigen Positionen erfasst, so erfolgt eine sicherheitsgerichtete Reaktion, wie ein Abbremsen, Ausweichen oder ein Nothalt der Maschine.

Die Sicherheitsanforderungen sind in Normen wie der EN13849 für Maschinensicherheit und der Gerätenorm EN61496 für berührungslos wirkende Schutzeinrichtungen (BWS) niedergelegt. Dazu zählen sichere elektronische Auswertung durch redundante, diversitäre Elektronik, Funktionsüberwachung oder speziell Überwachung der Verschmutzung optischer Bauteile, insbesondere einer Frontscheibe.

Dabei kann nicht immer vorausgesetzt werden, dass die Kamera einen Referenzhintergrund beobachtet, an dem die Funktionsfähigkeit getestet werden könnte, beispielsweise weil die Kamera an einem Fahrzeug montiert ist. Dann lässt sich nicht ohne Weiteres beurteilen, ob das System blind oder der überwachte Raum tatsächlich leer ist.

Bei sicheren Laserscannern wird dies mit einem internen Referenzziel in einem Totbereich im Rücklauf des Scanstrahls gelöst, anhand dessen die Detektionsfähigkeit zyklisch in jedem Umlauf überwacht wird. Das ist beispielsweise in der DE 43 40 756 A1 beschrieben. Eine 3D-Kamera hat keinen vergleichbaren Totbereich, in dem ein Referenzziel untergebracht werden könnte.

Die DE 10 2007 008 806 C5 offenbart eine optoelektronische Überwachung mit Test durch Dynamisierung. Mit einer Zusatzbeleuchtung wird Licht mit einer Modulation in Form von Lichtpulsen oder periodischer Modulation mit einem bestimmten Phasenversatz auf ein Empfangselement ausgesandt, und es wird zur Fehleraufdeckung geprüft, ob eine Lichtlaufzeitauswertung zu einem erwarteten Ergebnis kommt, das den zeitlichen Eigenschaften der ausgesandten Modulation entspricht. Dieser Test kann aber nur exklusiv erfolgen, die eigentliche Lichtquelle zum Messen von Objektabständen bleibt solange deaktiviert. Dadurch verringern die Tests die Verfügbarkeit, denn der Messbetrieb muss mit den für die Sicherheit geforderten kurzen Zyklen immer wieder unterbrochen werden. Mit einer Überlagerung von Test- und Messlicht könnte die herkömmliche Vorrichtung auch nicht umgehen.

Aus der DE 20 2007 014 917 U1 ist eine optoelektronische Sensoranordnung mit einem optischen Element im Sendestrahlengang bekannt, das Licht einer ersten Wellenlänge transmittiert und Licht einer zweiten Wellenlänge reflektiert. Ein ortsauflösender Empfänger wird durch Licht einer Lichtquelle der zweiten Wellenlänge getestet, das von dem optischen Element in den Empfänger gespiegelt wird. Eine 3D-Kamera wird dabei nicht vorgeschlagen, es wird also kein Lichtlaufzeitverfahren getestet, sondern nur, ob der ortsauflösende Empfänger noch ein Helligkeitssignal erzeugt. Außerdem ist die Verwendung von zwei Wellenlängen aufwändig, und es tritt ein Lichtverlust an dem optischen Element auf.

Die DE 10 2010 038 566 A1 offenbart eine Lichtlaufzeitkamera mit Funktionsüberwachung durch Umlenken eines Teils der Beleuchtungsquelle auf einen Referenzphotosensor sowie eine zuschaltbare Referenzlichtquelle, die den Photosensor zu Testzwecken mit moduliertem Licht beleuchtet. Die vollständige Überprüfung der Signalkette ist dabei nur während einer Unterbrechung der Distanzmessung möglich.

Aus der DE 10 2014 206 236 A1 ist eine weitere Lichtlaufzeitkamera bekannt, die mindestens zwei Bereiche mit unterschiedlichen Öffnungswinkeln pro Pixel aufweist, damit im Nahbereich eine höhere laterale Auflösung erzielt wird als im Fernbereich. Es wird erwähnt, dass zur Verbesserung der Messgenauigkeit und/oder Erweiterung des Messbereichs Messungen mit unterschiedlichen Modulationsfrequenzen durchgeführt werden können.

Es ist deshalb Aufgabe der Erfindung, die Verlässlichkeit der Messung mit einer 3D-Lichtlaufzeitkamera zu verbessern.

Diese Aufgabe wird durch eine 3D-Lichtlaufzeitkamera und ein Verfahren zur Erfassung dreidimensionaler Bilddaten aus einem Erfassungsbereich nach Anspruch 1 beziehungsweise 12 gelöst, insbesondere nach dem Prinzip der Photomischdetektion (PMD). Eine Beleuchtungseinheit erzeugt das Sendelicht, das mit mindestens zwei Frequenzen moduliert ist. Ein Bildsensor erzeugt in einer Vielzahl von Pixeln aus dem Empfangslicht, also dem in dem Erfassungsbereich direkt reflektierten oder diffus remittierten Sendelicht, entsprechende Empfangssignale, die in Auswertungsschaltungen weiterverarbeitet werden. Die Auswertungsschaltungen sind den Pixeln zugeordnet und vorzugsweise zumindest teilweise auf dem Bildsensor oder sogar in den Pixeln vorgesehen. Darin wird aus den Empfangssignalen für die jeweiligen Pixel mit einem Phasenverfahren anhand der beiden Frequenzen die Phasendifferenz zwischen Sende- und Empfangslicht und so mindestens ein Abstand bestimmt. Die mehreren Frequenzen ermöglichen eine Mehrzielfähigkeit, bei der mehrere Abstände zu mehreren Ziele hintereinander im selben Sichtstrahl eines einzigen Pixels gemessen werden können. Mit einem internen Referenzziel, innerhalb der 3D-Lichtlaufzeitkamera, als Teil von deren Gehäuse oder jedenfalls mit dem Gehäuse verbunden, wird ein Teil des Sendelichts bereits innerhalb der 3D-Lichtlaufzeitkamera auf den Bildsensor geleitet.

So entsteht ein Referenzpfad, mit dem Empfangslicht aus definierter Entfernung auf den Bildsensor trifft, ohne zuvor in den Erfassungsbereich gelangt zu sein.

Die Erfindung geht von dem Grundgedanken aus, die 3D-Lichtlaufzeitkamera sicher auszubilden, vorzugsweise im Sinne der einleitend genannten oder vergleichbarer Normen für den Einsatz in der Sicherheitstechnik. Es wird ein Funktionstest der Lichtlaufzeitmessung möglichst in der gesamten Kette von Beleuchtungseinheit über den Bildsensor und die Auswertung durchgeführt. Um die Detektionsfähigkeit sicherzustellen, werden vorzugsweise alle Pixel getestet, jedenfalls genügend Pixel innerhalb aller sicherheitsrelevanten Teilbereiche des Bildsensors, so dass bei einem Ausfall nicht getesteter Pixel die Sicherheitsfunktion erhalten bleibt.

Für den Funktionstest wird eine für das Referenzziel bestimmte Messgröße mit einer Referenzmessgröße verglichen. Dafür kann es ausreichen, einen festen Abstand des Referenzziels vorauszusetzen und die Amplitude beziehungsweise die Amplituden je Modulationsfrequenz mit Referenzmessgrößen zu vergleichen. Eine Amplitudenüberwachung genügt in vielen Fällen, weil dies direkt mit der Detektionsempfindlichkeit im gesamten Sende-Empfangspfad korreliert.

Vorzugsweise ist die Messgröße ein für das Referenzziel bestimmter Abstand und die Referenzmessgröße ein Referenzabstandswert. Die Auswertungsschaltungen messen den Abstand zu dem Referenzziel wie denjenigen zu einem Objekt im Erfassungsbereich. Dieser Abstand wird mit einem Referenzwertabstand zu dem internen Referenzziel verglichen, denn die Geometrie in der 3D-Lichtlaufzeitkamera liegt fest, so dass der korrekte Referenzwertabstand berechnet oder anfangs eingelernt werden kann. Der Referenzwertabstand kann sich von Pixel zu Pixel unterscheiden, aber die Dimensionen des Bildsensors sind klein genug, dass oft ein konstanter Referenzwertabstand für alle Pixel genügt. Da die Auswertungsschaltungen mehrere Ziele im Sichtstrahl des jeweiligen Pixels erfassen, wird auch die Entfernung zu dem Referenzziel als eines von mehreren Zielen gemessen. Somit bleibt auch während des Funktionstests die Messfähigkeit erhalten, es kann parallel zum eigentlichen Messbetrieb getestet werden, statt die Messung zyklisch für den Funktionstest unterbrechen zu müssen. Eine Überwachung des Abstands des Referenzziels kann mit einer Amplitudenüberwachung kombiniert werden.

Die Erfindung hat den Vorteil, dass durch eine ständige Selbstüberwachung der Detektionsfähigkeit beziehungsweise Funktionstests in praktisch beliebig wählbaren Zeitabständen die Zuverlässigkeit der 3D-Lichtlaufzeitkamera ganz erheblich zunimmt. Dadurch wird insbesondere der Performance-Level im Sinne sicherheitstechnischer Normen gesteigert. Da die Selbstüberwachung keine Unterbrechung des Messbetriebs erzwingt, erhöht sich die Verfügbarkeit der 3D-Lichtlaufzeitkamera.

Die Auswertungseinheit ordnet bevorzugt den jeweils kürzesten gemessenen Abstand eines Pixels dem Referenzziel zu. Aus Sicht der Auswertungsschaltungen ist das Referenzziel erst einmal ein Objekt wie jedes andere. Unter mehreren gemessenen Abständen im Sichtstrahl eines Pixels kann es aber kein näheres Objekt geben als das interne Referenzziel, weil sich dieses Objekt im Inneren der 3D-Lichtlaufzeitkamera befinden müsste.

Die Beleuchtungseinheit moduliert bevorzugt das Sendelicht mit mehr als zwei Frequenzen, und die Auswertungsschaltungen sind dafür ausgebildet, mehr als zwei Abstände anhand der mehr als zwei Frequenzen zu bestimmen. Mit zusätzlichen Frequenzen wird die Mehrzielfähigkeit erweitert. Auch bei Verwendung von zwei Frequenzen werden schon mehrere Ziele längs eines Sichtstrahls unterschieden, aber wenn eines davon das Referenzziel ist, können mehrere Messobjekte dahinter nicht mehr unterschieden werden. Mit mehr als zwei Frequenzen bleibt die 3D-Lichtlaufzeitkamera auch mit der Referenzmessung mehrzielfähig, etwa um Objekte hinter einer Glasscheibe oder einem Regentropfen zu vermessen.

Vorzugsweise bildet eine Frontscheibe, welche ein Gehäuse der 3D-Lichtlaufzeitkamera in einem Durchtrittsbereich des Sendelichts abschließt, das interne Referenzziel. Ein interner Frontscheibenreflex wird herkömmlich als Störung angesehen und ausgeblendet, beispielsweise durch Schrägstellen der Frontscheibe, damit der Frontscheibenreflex den Bildsensor nicht trifft. Hier fungiert umgekehrt die Frontscheibe vorteilhaft als das interne Referenzziel, so dass also keine zusätzlichen baulichen Maßnahmen notwendig sind, um den Funktionstest durchführen zu können. Es wird geprüft, ob die getesteten Pixel einen Frontscheibenreflex in erwarteter Entfernung messen. Es tritt genügend Licht durch die Frontscheibe hindurch, um zugleich Abstände zu Objekten in dem Erfassungsbereich zu messen.

Die Auswertungseinheit ist bevorzugt dafür ausgebildet, anhand der Empfangssignale eine Beeinträchtigung der Frontscheibe zu detektieren. Für die Einhaltung der Sicherheitsanforderungen ist eine Frontscheibenüberwachung erforderlich, damit die 3D-Lichtlaufzeitkamera nicht unbemerkt wegen Verunreinigungen oder Beschädigungen ihre Detektionsfähigkeit einbüßt. Dafür werden sonst zusätzliche Maßnahmen ergriffen, wie das Durchstrahlen mit eigenen Lichtsender- und Lichtempfängerpaaren. Wenn die Frontscheibe bereits als internes Referenzziel fungiert, können Driften im Reflexionsverhalten der Frontscheibe insbesondere in der Amplitude des Frontscheibenreflexes bemerkt werden, und auf zusätzliche Maßnahmen zur Frontscheibenüberwachung kann verzichtet werden.

Das Referenzziel ist bevorzugt im Strahlengang vor der Beleuchtungseinheit angeordnet und lenkt einen Teil des Sendelichts auf den Bildsensor um. Ein solches Referenzziel befindet sich innerhalb der 3D-Lichtlaufzeitkamera noch vor der Frontscheibe und sorgt für eine Art optischen Teilkurzschluss von der Beleuchtungseinheit auf die zu testenden Pixel des Bildsensors, über den ein Referenzanteil in den Empfangssignalen entsteht. Das betrifft jedoch nur einen Teil des Sendelichts, beispielsweise einen ungenutzten seitlichen Teil, und deshalb können weiterhin gleichzeitig Abstände zu Objekten in dem Erfassungsbereich gemessen werden.

Das Referenzziel ist vorzugsweise teiltransparent. Ein solches Referenzziel darf geometrisch auch einen relevanten Bereich des Sendelichts verdecken. Aufgrund der Teiltransmission in den Erfassungsbereich wird der von dem Referenzziel verdeckte Teil des Erfassungsbereichs immer noch ausreichend beleuchtet, um dort Abstände zu Objekten zu messen.

Das Referenzziel weist bevorzugt mindestens ein Lichtleitelement auf. Damit wird Sendelicht besonders zielgerichtet über einen größeren Teil des Referenzlichtweges auf den Bildsensor geführt und nicht nur an einer oder wenigen Stellen umgelenkt beziehungsweise reflektiert. Es ist auf diese Weise auch möglich, bestimmte Zielpixel mit Referenzlicht zu beleuchten statt flächig den ganzen Bildsensor oder größere Bereiche des Bildsensors.

Die 3D-Lichtlaufzeitkamera weist bevorzugt eine Hilfslichtquelle auf, um den Bildsensor zu beleuchten. Der Funktionstest basiert damit nicht auf dem Sendelicht, sondern zusätzlichem Licht der Hilfslichtquelle. Der Lichtpfad der Hilfslichtquelle zu dem Bildsensor kann direkt sein und ist weitgehend losgelöst von dem eigentlichen Messpfad. Durch passende Modulation der Hilfslichtquelle können verschiedene Referenzabstände eines internen Referenzziels erzeugt werden. Im Gegensatz zu dem herkömmlichen Vorgehen beispielsweise gemäß DE 10 2007 008 806 C5 wird für den Funktionstest der Messbetrieb nicht unterbrochen und der Bildsensor nicht geblendet. Vielmehr kann die Beleuchtungseinheit parallel zu der Hilfslichtquelle aktiv bleiben, und durch Auswertung der Überlagerung von Empfangslicht aus dem Erfassungsbereich und dem Licht der Hilfslichtquelle finden Funktionstest und eigentliche Messung gleichzeitig statt.

Die 3D-Lichtlaufzeitkamera weist bevorzugt einen Testlichtempfänger zum Testen der Funktionsfähigkeit der Beleuchtungseinheit auf. Bei einem Funktionstest des Bildsensors und der Lichtlaufzeitmessung mittels einer Hilfslichtquelle wird die Beleuchtungseinheit im Gegensatz zu anderen Ausführungsformen mit Funktionstest basierend auf dem eigentlichen Sendelicht nicht automatisch mit geprüft. Daher kann es sinnvoll sein, einen zusätzlichen Testlichtempfänger etwa in Gestalt einer Monitor-Diode vorzusehen, auf die innerhalb der 3D-Lichtlaufzeitkamera ein kleiner Teil des Sendelichts ausgekoppelt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine vereinfachte Blockdarstellung einer 3D-Lichtlaufzeitkamera;

Fig. 2   eine Skizze zur Erläuterung der Variablen bei simultaner Modulation mit zwei Frequenzen;

Fig. 3   eine vereinfachte Blockdarstellung des Sende- und Empfangspfades einer 3D-Lichtlaufzeitkamera, worin die Frontscheibe als Referenzziel fungiert;

Fig. 4   eine vereinfachte Blockdarstellung des Sende- und Empfangspfades einer 3D-Lichtlaufzeitkamera mit halbtransparentem internem Referenzziel im Sendelichtpfad;

Fig. 5   eine vereinfachte Blockdarstellung des Sende- und Empfangspfades einer 3D-Lichtlaufzeitkamera mit einem Lichtleitelement zur Erzeugung eines internen Referenzziels; und

Fig. 6   eine vereinfachte Blockdarstellung des Sende- und Empfangspfades einer 3D-Lichtlaufzeitkamera mit einer Hilfslichtquelle als Referenzziel sowie einer Monitordiode zum Überwachen der Beleuchtung.

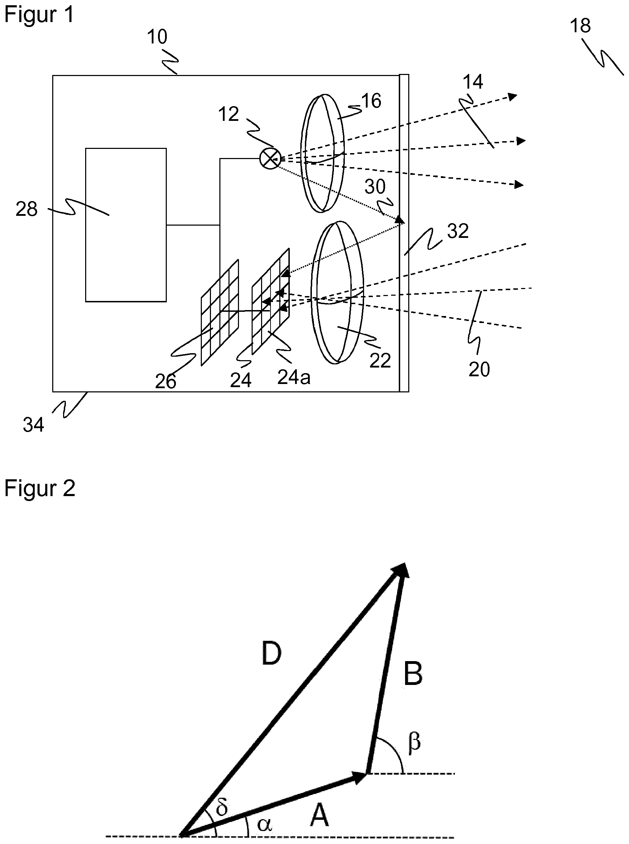

Figur 1 zeigt eine vereinfachte Blockdarstellung einer 3D-Lichtlaufzeitkamera. Eine Beleuchtungseinheit 12 erzeugt Sendelicht 14, mit dem über eine Sendeoptik 16 ein Erfassungsbereich 18 beleuchtet wird. Die Beleuchtungseinheit 12 weist dafür mindestens eine Lichtquelle auf, beispielsweise LEDs oder Laser in Form von Kantenemittern oder VCSEL. Eine nicht gezeigte Treiberschaltung ist in der Lage, das Sendelicht 14 simultan mit mindestens zwei Frequenzen zu modulieren. Die Frequenzen sind unterschiedlich, und zwar nicht nur marginal und auch nicht nur als einfache Harmonische voneinander. Vorsichtshalber sei erwähnt, dass es sich um eine Amplitudenmodulation des Sendelichts 14 handelt, die mit der Wellenlänge des Lichts nichts zu tun hat.

Trifft das Sendelicht 14 in dem Erfassungsbereich 18 auf Objekte, so wird es dort reflektiert oder diffus remittiert. Entsprechendes zurückkehrendes Empfangslicht 20 wird über eine Empfangsoptik 22 auf einen Bildsensor 24 mit einer Vielzahl von Pixeln 24a geführt. Die Empfangsoptik 22 ist vorzugsweise komplexer als die dargestellte Einzellinse und umfasst beispielsweise auch Blenden oder ein optisches Filter wie ein auf die Wellenlänge des Sendelichts 14 abgestimmtes Bandpassfilter. Den Pixeln 24a sind Auswertungsschaltungen 26 zugeordnet, die aus den in den Pixeln 24a erzeugten Empfangssignalen mit einem Lichtlaufzeitverfahren Abstände bestimmen. Eine Auswertungseinheit 28 ist mit den Auswertungsschaltungen 26 verbunden, um die gemessenen Abstände weiterzuverarbeiten.

Die Auftrennung in einen Bildsensor 24, separate Auswertungsschaltungen 26 und eine weitere Auswertungseinheit 28 dient vor allem der verständlichen Erläuterung. Vorzugsweise ist zumindest die Funktionalität der Auswertungsschaltungen 26 in die Pixel 24a oder den Bildsensor 24 integriert. Allgemein ist praktisch jede Aufteilung von Auswertungen über die Pixel 24a, den Bildsensor 24, Auswertungsschaltungen 26 und eine Auswertungseinheit 28 vorstellbar, einschließlich einer externen Auswertung ab einem gewissen Vorverarbeitungsstadium der Empfangssignale.

Im Betrieb wird der Erfassungsbereich 18 mit Sendelicht 14 beleuchtet, das simultan mit mehreren Frequenzen moduliert ist. Die Auswertungsschaltungen 26 bestimmen über den Phasenversatz zwischen Sendelicht 14 und Empfangslicht 20 die Lichtlaufzeit (TOF, Time of Flight) bis zu einem Objekt und zurück, insbesondere nach dem Prinzip der Photomischdetektion (PMD). Durch Auswertung der mehreren Modulationsfrequenzen wird nicht oder jedenfalls nicht nur der Eindeutigkeitsbereich vergrößert, sondern es werden mehrere Abstände zu verschiedenen Objekten bestimmt, die hintereinander im Sichtstrahl eines Pixels 24a angeordnet sind, etwa eine Glasscheibe und ein Objekt dahinter.

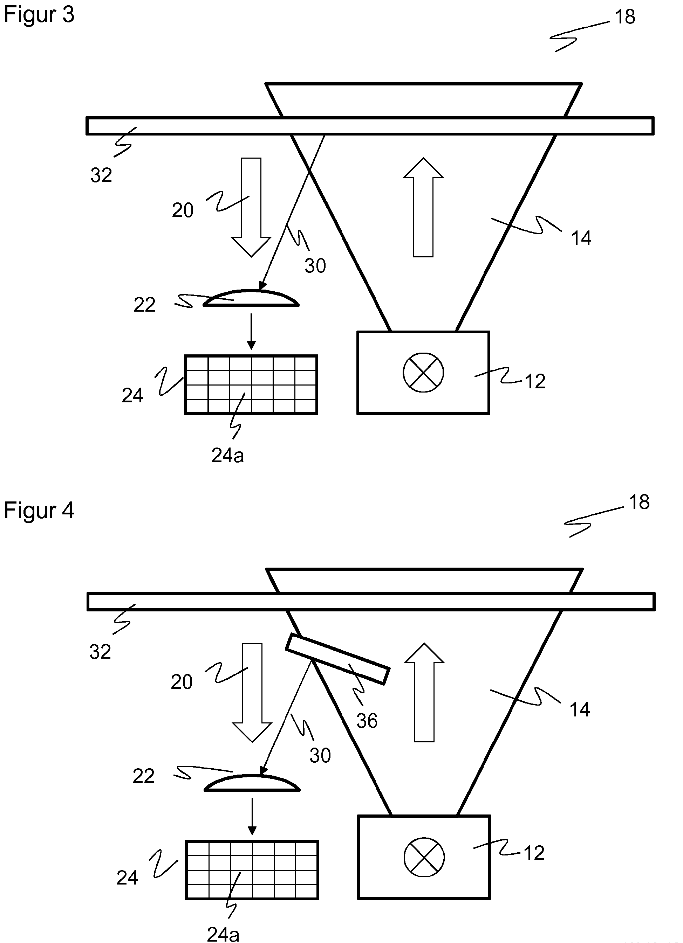

Die auf diese Weise gewonnene Mehrzielfähigkeit wird erfindungsgemäß genutzt, um im selben Sichtstrahl eines Pixels 24a Abstände sowohl zu einem internen Referenzziel als auch zu zumindest einem Objekt im Erfassungsbereich 18 zu messen. Damit wird ein Funktionstest parallel zum Messbetrieb ermöglicht. In Figur 1 ist das interne Reflexionsziel durch eine interne Reflexion 30 an einer Frontscheibe 32 angedeutet, die ein Gehäuse 34 der 3D-Lichtlaufzeitkamera 10 im Lichtdurchtrittsbereich abschließt. Verschiedene Ausführungsformen eines internen Referenzziels werden später unter Bezugnahme auf die Figuren 3 bis 6 vorgestellt.

Figur 2 ist eine Skizze, um eine Beispielrechnung für die Messung von Abständen sowohl zu einem internen Referenzziel als auch zu einem Objekt dahinter unter simultaner Verwendung zweier Modulationsfrequenzen zu illustrieren. Dargestellt ist ein Zeigerdiagramm, in dem sich zwei Signale gleicher Frequenz, aber unterschiedlicher Amplitude (A; B) und Phase ($\alpha$; $\beta$) addieren.

Dieser Zusammenhang gilt für jede Modulationsfrequenz i=1,2. Ai und Bi stellen dabei Echos von zwei verschiedenen Zielen dar, wobei A in diesem Beispiel für das Signal von dem internen Referenzziel und B für das Signal von einem Objekt im Erfassungsbereich 18 steht. Di ist das jeweilige Summensignal einer Modulationsfrequenz auf dem Bildsensor 24, von dem Amplitude und Phase bestimmt werden kann. Für zwei Modulationsfrequenzen ergeben sich aus dem Zeigerdiagramm folgende Gleichungen:

$$\text{I} \qquad D1*\cos(\delta 1)=A1*\cos(\alpha 1)+B1*\cos(\beta 1)$$

$$\text{II} \qquad D2*\cos(\delta 2)=A2*\cos(\alpha 2)+B2*\cos(\beta 2)$$

$$\text{III} \qquad D1*\sin(\delta 1)=A1*\sin(\alpha 1)+B1*\sin(\beta 1)$$

$$\text{IV} \qquad D2*\sin(\delta 2)=A2*\sin(\alpha 2)+B2*\sin(\beta 2)$$

Dabei stehen jeweils links vom Gleichheitszeichen die gemessenen Größen auf dem Bildsensor 24, nämlich die zu den beiden Modulationsfrequenzen gehörigen Amplituden D1, D2 und Phasen $\delta 1$, $\delta 2$.

Bei bekannter Entfernung des internen Referenzziels sind die Phasen $\alpha 1$, $\alpha 2$ für jede Modulationsfrequenz bekannt. Ferner darf auch vorausgesetzt werden, dass bei jeder Modulationsfrequenz die Signalwege und das Verhältnis der Amplituden beider Ziele gleich sind:

$$\text{V} \qquad B1/A1 = B2/A2$$

Da beide Frequenzen vom gleichen Objekt im Erfassungsbereich 18 reflektiert werden, sind die Phasen $\beta1$ und $\beta2$ voneinander abhängig. Die Beziehung hängt von den Modulationsfrequenzen, der Ausbreitungsgeschwindigkeit und natürlich der Entfernung des Objekts ab. Dieser Zusammenhang soll hier vereinfacht durch die Funktion $f(\beta1)$ dargestellt werden:

$$\text{VI} \qquad \beta2 = f(\beta1)$$

Damit ist ein nichtlineares Gleichungssystem I...VI gegeben, in dem es noch sechs Unbekannte A1, A2, B1, B2, $\beta1$ und $\beta2$ gibt. Das Gleichungssystem ist damit eindeutig bestimmt und lässt sich numerisch lösen. Die Lösung wird dadurch vereinfacht, dass es Erwartungswerte für die Amplituden A1, A2 des Referenzziels gibt, so dass der numerischer Solver mit passenden Anfangswerten startet kann.

In diesem Rechenbeispiel wurden die Phasen $\alpha1$, $\alpha2$ für jede Modulationsfrequenz als bekannt vorausgesetzt. Der Abstand zu dem internen Referenzziel wird also nicht gemessen, sondern festgelegt. Überwacht wird auf diese Weise die Amplitude des Signals von dem internen Referenzziel, und da diese direkt mit der Detektionsempfindlichkeit im Sende-Empfangspfad korreliert, ist das auch bereits ein guter Funktionstest. Das System ist auch in dem Sinne mehrzielfähig, als einerseits die Amplitudeninformation für das interne Referenzziel gewonnen und trotzdem ein Abstand zu einem Objekt im Erfassungsbereich 18 gemessen wird.

Es ist aber durchaus möglich, alternativ oder zusätzlich zu einer Amplitudenüberwachung den Abstand zu dem internen Referenzziel zu messen und zu überwachen. Dazu wird mindestens eine zusätzliche Modulationsfrequenz verwendet. Auch das führt dann zu einem nichtlinearen Gleichungssystem analog dem für zwei Modulationsfrequenzen gezeigten Beispiel, das numerisch gelöst werden kann. Entsprechend ist durch zusätzliche Modulationsfrequenzen auch möglich, den Abstand zu mehr als einem Objekt in dem Erfassungsbereich 18 zusätzlich zu dem internen Referenzziel zu vermessen.

Figur 3 zeigt eine vereinfachte Blockdarstellung des Sende- und Empfangspfads einer 3D-Lichtlaufzeitkamera 10. Dabei sind für gleiche oder einander entsprechende Merkmale dieselben Bezugszeichen vergeben wie zuvor. Die Ausführungsform der Figur 3 entspricht derjenigen der Figur 1, in der die Frontscheibe 32 als internes Referenzziel fungiert. Die interne Reflexion 30, auch als Frontscheibenreflex bezeichnet, überlagert sich mit dem Empfangslicht 20. Der Signalanteil der internen Reflexion 30 kann nun aus den Überlagerungen herausgerechnet werden, und dies wird genutzt, um die Pixel 24a hinsichtlich ihrer Detektionsfähigkeit zu überwachen. Zugleich werden Abstände mit dem Signalanteil des Empfangslichts 20 gemessen, und deshalb ist der Funktionstest zeitgleich zur eigentlichen Messung möglich. Die 3D-Lichtlaufzeitkamera 10 kann ohne Unterbrechung auch während des Funktionstests messen.

Wird zu einem Pixel 24a kein Abstand entsprechend der erwarteten Entfernung der Frontscheibe 32 gemessen, so wird auf einen Detektionsfehler geschlossen. Optional wird nicht nur die Phaseninformation genutzt, um den Abstand zu prüfen, sondern auch die Amplitudeninformation, um eine Degradation im optischen Pfad durch Leistungsabfall der Beleuchtungseinheit 12 oder Beeinträchtigungen der Optiken 16, 22 beziehungsweise der Frontscheibe 32 festzustellen. Auf diese Weise kann der gesamte optische Pfad mit Beleuchtungseinheit 12, Frontscheibe 32, Empfangsoptik 22, Bildsensor 24 und Auswertungsschaltungen 26 parallel zum Messbetrieb getestet werden.

Figur 4 zeigt eine weitere Ausführungsform in einer Darstellung ähnlich Figur 3. Statt die Frontscheibe 32 als Referenzziel zu nutzen, ist hier ein dediziertes internes Referenzziel 36 zwischen Beleuchtungseinheit 12 und Frontscheibe 32 vorgesehen. Das interne Referenzziel 36 kann wie dargestellt teiltransparent mit definiertem Reflexions- und Transmissionsanteil sein, damit auch der geometrisch verdeckte Teil des Erfassungsbereichs 18 durch das interne Referenzziel 36 hindurch noch ausreichend beleuchtet wird. Alternativ wird es in einem seitlichen Teil des Bündels des Sendelichts 14 angeordnet, so dass der Erfassungsbereich 18 nur peripher außerhalb des Empfangsbereichs des Bildsensors 24 verdeckt wird. Anstelle einer internen Reflexion 30 wäre auch eine Lichtumlenkung durch eine Prismenanordnung oder dergleichen vorstellbar.

Ein Vorteil eines ganz im Inneren der 3D-Lichtlaufzeitkamera 10 angeordneten internen Referenzziels 36 im Gegensatz zu einer Frontscheibe 32 ist, dass keine Gefahr der Verschmutzung besteht. Daher kann zur Selbstüberwachung auch ein verlässlicher Erwartungswert für die Amplitude gespeichert werden. Im Übrigen wäre prinzipiell denkbar zu fordern, dass sowohl das interne Referenzziel 36 als auch die Frontscheibe 32 in erwartetem Abstand erfasst werden. Um das trennen zu können und gleichzeitig noch einen Abstand zu einem Objekt in dem Erfassungsbereich 18 zu messen, sollten vorzugsweise mehr als zwei Modulationsfrequenzen verwendet werden.

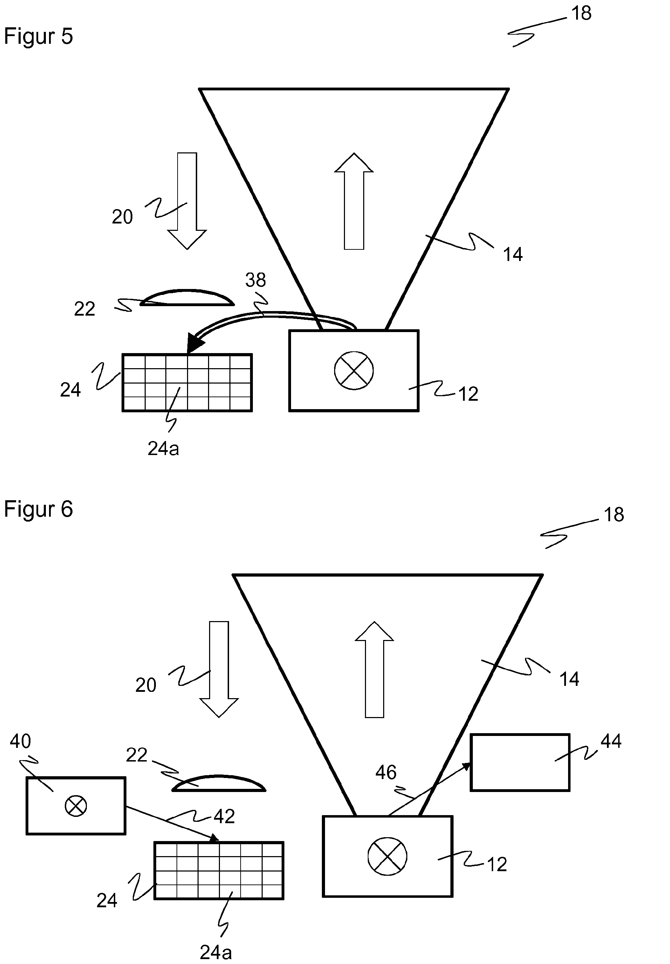

Figur 5 zeigt eine weitere Ausführungsform. Im Gegensatz zu der Ausführungsform gemäß Figur 4 ist hier das interne Referenzziel als Lichtleitelement 38 ausgebildet, das ganz gezielt Licht von der Beleuchtungseinheit 12 auskoppelt und direkt auf den Bildsensor 24 führt. Damit kann besser bestimmt werden, an welcher Stelle Licht aus- und eingekoppelt wird, und es wird Streulicht innerhalb der 3D-Lichtlaufzeitkamera 10 vermieden. Dieses Beispiel zeigt, dass der zu überprüfende Abstand zu dem Referenzziel richtig verstanden werden muss, denn hier handelt es sich nicht um den physischen Abstand zu dem Lichtleitelement 38, sondern die Länge des Referenzlichtwegs, der also vorzugsweise die maßgebliche, vereinfachend mit Abstand bezeichnete Größe ist und in anderen Fällen tatsächlich dem physischen Abstand entspricht.

Figur 6 zeigt eine weitere Ausführungsform, die als internes Referenzziel eine Hilfslichtquelle 40 verwendet. Die Hilfslichtquelle 40 strahlt hier direkt moduliertes Licht 42 auf den Bildsensor 24, das sich wiederum mit dem Empfangslicht 20 überlagert. Die Modulation entspricht derjenigen bei Umlenkung des Sendelichts 14 an einem Referenzziel in definierter Entfernung, wobei die definierte Entfernung dem tatsächlichen Abstand der Hilfslichtquelle 40 entsprechen, aber auch gezielt davon abweichen kann. Ebenso ist denkbar, dass die Hilfslichtquelle 40 ihr moduliertes Licht 42 nicht direkt, sondern über nicht gezeigte reflektierende, umlenkende oder lichtleitende Elemente auf den Bildsensor 24 führt. Prinzipiell wäre denkbar, die Beleuchtungseinheit 12 nun während des Funktionstests auszuschalten, um eine rechnerische Signaltrennung zu vermeiden, aber das würde auch bedeuten, dass der Messbetrieb während des Funktionstests unterbrochen werden müsste.

Bei Verwendung einer Hilfslichtquelle 40 wird die Beleuchtungseinheit 12 nicht mehr automatisch mitgetestet. In den anderen Ausführungsformen nach Figur 3 bis 5 würde ein Defekt der Beleuchtungseinheit 12 bemerkt, da kein Abstand zum Referenzziel gemessen würde. Deshalb ist in der Ausführungsform gemäß Figur 6 vorzugsweise für eine vollständige Selbstüberwachung ein Testlichtempfänger 44 beispielsweise in Form einer Monitor-Diode vorgesehen. Ein Teil 46 des Sendelichts 14 wird auf den Testlichtempfänger 44 ausgekoppelt, der somit einen Leistungsabfall oder gar Ausfall der Beleuchtungseinheit 12 bemerkt. Auch dieser Teil der Überwachung kann ständig parallel zum Messbetrieb erfolgen.

**Patentansprüche**

1. 3D-Lichtlaufzeitkamera (10) zur Erfassung dreidimensionaler Bilddaten aus einem Erfassungsbereich (18), die eine Beleuchtungseinheit (12) zum Aussenden von simultan in mindestens zwei Frequenzen moduliertem Sendelicht (14) in den Erfassungsbereich (18), einen Bildsensor (24) mit einer Vielzahl von Pixeln (24a) zum Erzeugen von Empfangssignalen aus in dem Erfassungsbereich (18) zurückgeworfenem Sendelicht (20), eine Vielzahl den Pixeln (24a) zugeordnete Auswertungsschaltungen (26) zur Bestimmung von jeweils mindestens einem Abstand pro Pixel (24a) aus den Empfangssignalen mittels eines Lichtlaufzeitverfahrens anhand der mindestens zwei Frequenzen sowie ein internes Referenzziel (32, 36, 38, 40) aufweist, das einen Teil des Sendelichts (14) oder Testlicht (42) innerhalb der 3D-Lichtlaufzeitkamera (10) auf den Bildsensor (24) leitet, wobei das Testlicht (42) moduliertes Licht ist, dessen Modulation derjenigen bei Umlenkung des Sendelichts (14) an einem Referenzziel in definierter Entfernung entspricht,
**dadurch gekennzeichnet,**
**dass** die 3D-Lichtlaufzeitkamera (10) dafür ausgebildet ist, im selben Sichtstrahl eines Pixels (24a) Abstände sowohl zu dem internen Referenzziel (32, 36, 38, 40) als auch zumindest zu einem Objekt im Erfassungsbereich (18) zu messen, um so einen Funktionstest zeitgleich zur eigentlichen Messung zu ermöglichen, und eine Auswertungseinheit (28) aufweist, die für den Funktionstest eine von den Auswertungsschaltungen (26) bestimmte Messgröße des Referenzziels (32, 36, 38, 40) mit einer Referenzmessgröße vergleicht.

2. 3D-Lichtlaufzeitkamera (10) nach Anspruch 1,
wobei die Messgröße ein für das Referenzziel bestimmter Abstand und die Referenzmessgröße ein Referenzabstandswert ist.

3. 3D-Lichtlaufzeitkamera (10) nach Anspruch 1 oder 2,
wobei die Auswertungseinheit (28) den jeweils kürzesten gemessenen Abstand eines Pixels (24a) dem Referenzziel (32, 36, 38, 40) zuordnet.

4. 3D-Lichtlaufzeitkamera (10) nach einem der vorhergehenden Ansprüche,
wobei die Beleuchtungseinheit (12) das Sendelicht (14) mit mehr als zwei Frequenzen moduliert und die Auswertungsschaltungen (26) dafür ausgebildet sind, mehr als zwei Abstände anhand der mehr als zwei Frequenzen zu bestimmen.

5. 3D-Lichtlaufzeitkamera (10) nach einem der vorhergehenden Ansprüche,
wobei eine Frontscheibe (32), welche ein Gehäuse (34) der 3D-Lichtlaufzeitkamera (10) in einem Durchtrittsbereich des Sendelichts (14) abschließt, das interne Referenzziel bildet.

6. 3D-Lichtlaufzeitkamera (10) nach einem der vorhergehenden Ansprüche,
wobei die Auswertungseinheit (28) dafür ausgebildet ist, anhand der Empfangssignale eine Beeinträchtigung der Frontscheibe (32) zu detektieren.

7. 3D-Lichtlaufzeitkamera nach einem der vorhergehenden Ansprüche,
wobei das Referenzziel (36, 38) im Strahlengang vor der Beleuchtungseinheit (12) angeordnet ist und einen Teil (30) des Sendelichts (14) auf den Bildsensor (24) umlenkt.

8. 3D-Lichtlaufzeitkamera (10) nach einem der vorhergehenden Ansprüche,
wobei das Referenzziel (36) teiltransparent ist.

9. 3D-Lichtlaufzeitkamera (10) nach einem der vorhergehenden Ansprüche,
wobei das Referenzziel mindestens ein Lichtleitelement (38) aufweist.

10. 3D-Lichtlaufzeitkamera (10) nach einem der vorhergehenden Ansprüche,
die eine Hilfslichtquelle (40) aufweist, um den Bildsensor (24) zu beleuchten.

11. 3D-Lichtlaufzeitkamera (10) nach einem der vorhergehenden Ansprüche,
die einen Testlichtempfänger (44) zum Testen der Funktionsfähigkeit der Beleuchtungseinheit (12) aufweist.

12. Verfahren zur Erfassung dreidimensionaler Bilddaten aus einem Erfassungsbereich (18), bei dem simultan in mindestens zwei Frequenzen moduliertes Sendelicht (14) in den Erfassungsbereich (18) ausgesandt, aus in dem Erfassungsbereich (18) zurückgeworfenem Sendelicht (20) ortsaufgelöst eine Vielzahl von Empfangssignalen erzeugt und aus den Empfangssignalen mittels eines Lichtlaufzeitverfahrens jeweils mindestens ein Abstand anhand der mindestens zwei Frequenzen bestimmt wird, wobei ein Referenzziel (32, 36, 38, 40) einen Teil des Sendelichts (14) oder Testlicht (42) zurückleitet, noch bevor es in den Erfassungsbereich (18) eintritt, wobei das Testlicht (42) moduliertes Licht ist, dessen Modulation derjenigen bei Umlenkung des Sendelichts (14) an einem Referenzziel in definierter Entfernung entspricht,
**dadurch gekennzeichnet,**
**dass** für einen Funktionstest des Aussendens von moduliertem Sendelicht (14), der Erzeugung von Empfangssignalen und der Abstandsbestimmung mittels Lichtlaufzeitverfahrens eine für das Referenzziel (32, 36, 38, 40) bestimmte Messgröße mit einer Referenzmessgröße verglichen wird und dass im selben Sichtstrahl eines Pixels (24a) Abstände sowohl zu dem internen Referenzziel (32, 36, 38, 40) als auch zumindest zu einem Objekt im Erfassungsbereich (18) gemessen werden, um so den Funktionstest zeitgleich zur eigentlichen Messung zu ermöglichen.

**Claims**

1. A 3D time-of-flight camera (10) for capturing three-dimensional image data from a detection area (18), comprising an illumination unit (12) for transmitting transmitted light (14) modulated simultaneously in at least two frequencies into the detection area (18), an image sensor (24) having a plurality of pixels (24a) for generating received signals from reflected transmitted light (20) reflected in the detection area (18), a plurality of evaluation circuits (26) assigned to the pixels (24a) for respectively determining at least one distance per pixel (24a) from the received signals by means of a time-of-flight method using the at least two frequencies, and an internal reference target (32, 36, 38, 40) that directs a portion of the transmitted light (14) or test light (42) within the 3D time-of-flight camera (10) onto the image sensor (24), wherein the test light (42) is modulated light whose modulation corresponds to that of transmitted light (14) deflected at a reference target at a defined distance,
**characterized in that** the 3D time-of-flight camera (10) is configured to measure distances both to the internal reference target (32, 36, 38, 40) and to at least one object in the detection area (18) in the same visual ray of a pixel (24a) in order to enable a function test at the same time as the actual measurement, and comprises an evaluation unit (28) that, for the function test, compares a measured variable of the reference target (32, 36, 38, 40) determined by the evaluation circuits (26) with a reference measured variable.

2. The 3D time-of-flight camera (10) according to claim 1,
wherein the measured variable is a distance determined for the reference target and the reference measured variable is a reference distance value.

3. The 3D time-of-flight camera (10) according to claim 1 or 2,

wherein the evaluation unit (28) assigns the respective shortest measured distance of a pixel (24a) to the reference target (32, 36, 38, 40).

4. The 3D time-of-flight camera (10) according to any of the preceding claims, wherein the illumination unit (12) modulates the transmitted light (14) with more than two frequencies and the evaluation circuits (26) are configured to determine more than two distances on the basis of the more than two frequencies.

5. The 3D time-of-flight camera (10) according to any of the preceding claims, wherein a front window (32), that closes off a housing (34) of the 3D time-of-flight camera (10) in a passage region of the transmitted light (14), forms the internal reference target.

6. The 3D time-of-flight camera (10) according to any of the preceding claims, wherein the evaluation unit (28) is configured to detect an impairment of the front window (32) on the basis of the received signals.

7. The 3D time-of-flight camera (10) according to any of the preceding claims, wherein the reference target (36, 38) is arranged in the beam path in front of the illumination unit (12) and deflects a part (30) of the transmitted light (14) onto the image sensor (24).

8. The 3D time-of-flight camera (10) according to any of the preceding claims, wherein the reference target (36) is partially transparent.

9. The 3D time-of-flight camera (10) according to any of the preceding claims, wherein the reference target comprises at least one light guiding element (38).

10. The 3D time-of-flight camera (10) according to any of the preceding claims, comprising an auxiliary light source (40) for illuminating the image sensor (24).

11. The 3D time-of-flight camera (10) according to any of the preceding claims, comprising a test light receiver (44) for testing the operability of the illumination unit (12).

12. A method for detecting three-dimensional image data from a detection area (18), wherein transmitted light (14) modulated in at least two frequencies is transmitted simultaneously into the detection area (18), a plurality of received signals is generated with spatial resolution from reflected transmitted light (20) reflected in the detection area (18), and at least one distance is determined from the respective received signals by means of a time-of-flight method using the at least two frequencies, wherein a reference target (32, 36, 38, 40) returns a portion of the transmitted light (14) or test light (42) before it enters the detection area (18), wherein the test light (42) is modulated light whose modulation corresponds to that when the transmitted light (14) is deflected at a reference target at a defined distance, **characterized in that**, for a function test of the transmission of modulated transmitted light (14), the generation of received signals and the distance determination using the time-of-flight method, a measured variable determined for the reference target (32, 36, 38, 40) is compared with a reference measured variable, and **in that** distances are measured in the same visual ray of a pixel (24a) both to the internal reference target (32, 36, 38, 40) and to at least one object in the detection area (18) in order to enable the function test to be carried out at the same time as the actual measurement.

**Revendications**

1. Caméra 3D à temps de vol de lumière (10) pour l'acquisition de données d'image tridimensionnelles à partir d'une zone de détection (18), qui comprend une unité d'éclairage (12) destinée à émettre de la lumière d'émission (14), modulée simultanément dans au moins deux fréquences, vers la zone de détection (18), un capteur d'image (24) ayant une pluralité de pixels (24a), destiné à générer des signaux de réception à partir de la lumière d'émission (20) réfléchie dans la zone de détection (18), une pluralité de circuits d'évaluation (26) associés aux pixels (24a), destinés à déterminer chacun au moins une distance par pixel (24a) à partir des signaux de réception au moyen d'un procédé de temps de vol de lumière à l'aide desdites au moins deux fréquences, ainsi qu'une cible de référence interne (32, 36, 38, 40) qui dirige une partie de la lumière d'émission (14) ou de la lumière de test (42) vers le capteur d'image (24) à l'intérieur de la caméra 3D à temps de vol de lumière (10), la lumière de test (42) étant une lumière modulée dont la modulation correspond à celle de la déviation de la lumière d'émission (14) sur une cible de référence à une distance définie, **caractérisée en ce que**

la caméra 3D à temps de vol de lumière (10) est conçue pour mesurer, dans le même faisceau de vision d'un pixel (24a), les distances aussi bien par rapport à la cible de référence interne (32, 36, 38, 40) que par rapport à au moins un objet dans la zone de détection (18), afin de permettre ainsi un test de fonctionnement en même temps que la mesure proprement dite, et comprend une unité d'évaluation (28) qui, pour le test de fonctionnement, compare une grandeur de mesure de la cible de référence (32, 36, 38, 40), déterminée par les circuits d'évaluation (26), avec une grandeur de mesure de référence.

2. Caméra 3D à temps de vol de lumière (10) selon la revendication 1,
dans laquelle la grandeur de mesure est une distance déterminée pour la cible de référence, et la grandeur de mesure de référence est une valeur de distance de référence.

3. Caméra 3D à temps de vol de lumière (10) selon la revendication 1 ou 2, dans laquelle l'unité d'évaluation (28) associe à la cible de référence (32, 36, 38, 40) la distance mesurée respective la plus courte d'un pixel (24a).

4. Caméra 3D à temps de vol de lumière (10) selon l'une des revendications précédentes, dans laquelle l'unité d'éclairage (12) module la lumière d'émission (14) avec plus de deux fréquences, et les circuits d'évaluation (26) sont conçus pour déterminer plus de deux distances à l'aide des plus de deux fréquences.

5. Caméra 3D à temps de vol de lumière (10) selon l'une des revendications précédentes, dans laquelle une vitre frontale (32), refermant un boîtier (34) de la caméra 3D à temps de vol de lumière (10) dans une zone de passage de la lumière d'émission (14), constitue la cible de référence interne.

6. Caméra 3D à temps de vol de lumière (10) selon l'une des revendications précédentes, dans laquelle l'unité d'évaluation (28) est conçue pour détecter une dégradation de la vitre frontale (32) à l'aide des signaux de réception.

7. Caméra 3D à temps de vol de lumière selon l'une des revendications précédentes, dans laquelle la cible de référence (36, 38) est disposée devant l'unité d'éclairage (12) dans le chemin optique et fait dévier une partie (30) de la lumière émise (14) vers le capteur d'image (24).

8. Caméra 3D à temps de vol de lumière (10) selon l'une des revendications précédentes, dans laquelle la cible de référence (36) est partiellement transparente.

9. Caméra 3D à temps de vol de lumière (10) selon l'une des revendications précédentes, dans laquelle la cible de référence comprend au moins un élément de guidage de lumière (38).

10. Caméra 3D à temps de vol de lumière (10) selon l'une des revendications précédentes, comprenant une source de lumière auxiliaire (40) destinée à éclairer le capteur d'image (24).

11. Caméra 3D à temps de vol de lumière (10) selon l'une des revendications précédentes, comprenant un récepteur de lumière de test (44) destiné à tester le fonctionnement de l'unité d'éclairage (12).

12. Procédé d'acquisition de données d'image tridimensionnelles à partir d'une zone de détection (18), dans lequel une lumière d'émission (14), modulée simultanément dans au moins deux fréquences, est émise vers la zone de détection (18), une pluralité de signaux de réception est générée avec résolution spatiale à partir de la lumière d'émission (20) renvoyée dans la zone de détection (18), et au moins une distance respective est déterminée à partir des signaux de réception à l'aide desdites au moins deux fréquences au moyen d'un procédé de temps de vol de lumière, dans lequel une cible de référence (32, 36, 38, 40) renvoie une partie de la lumière d'émission (14) ou de la lumière de test (42) avant même qu'elle ne pénètre dans la zone de détection (18), la lumière de test (42) est une lumière modulée dont la modulation correspond à celle de la déviation de la lumière d'émission (14) sur une cible de référence à une distance définie,
**caractérisé en ce que**
pour un test de fonctionnement de l'émission de la lumière d'émission modulée (14), de la génération de signaux de réception et de la détermination de la distance au moyen du procédé de temps de vol de lumière, une grandeur de mesure, déterminée pour la cible de référence (32, 36, 38, 40), est comparée à une grandeur de mesure de référence, et **en ce que**, dans le même faisceau de vision d'un pixel (24a), les distances sont mesurées aussi bien par rapport à la cible de référence interne (32, 36, 38, 40) que par rapport à au moins un objet dans la zone de détection (18), afin de permettre ainsi le test de fonctionnement en même temps que la mesure proprement dite.

Figur 1

Figur 2

Figur 3

Figur 4

Figur 5

Figur 6

**EP 3 591 424 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4340756 A1
- DE 102007008806 C5
- DE 202007014917 U1
- DE 102010038566 A1
- DE 102014206236 A1